# EUROPÄISCHE PATENTANMELDUNG

(11) **EP 3 278 923 A1**
(43) Veröffentlichungstag der Anmeldung: **07.02.2018**
(21) Anmeldenummer: 17184651.2
(22) Anmeldetag: 03.08.2017
(51) Int. Cl.: B23Q 1/25, B23Q 17/09, B23Q 17/12

(54) **HANDHABUNGSVORRICHTUNG UND VERFAHREN ZUR ÜBERWACHUNG EINER HANDHABUNGSVORRICHTUNG**

(30) Priorität: 03.08.2016 DE 102016114378
(71) Anmelder: J. Schmalz GmbH, 72293 Glatten (DE)
(72) Erfinder: STOCKBURGER, Ralf, 72293 Glatten (DE); CONZELMANN, Timo, 72293 Glatten (DE); KUOLT, Harald Dr., 78586 Deilingen (DE)
(74) Vertreter: DREISS Patentanwälte PartG mbB

(57) **Zusammenfassung**

Die Erfindung betrifft eine Handhabungsvorrichtung (20) mit einer Haltevorrichtung (21) zum Fixieren eines Werkstückes (12), insbesondere Unterdruck-Greifvorrichtung oder Unterdruck-Spannvorrichtung (22), und mit einer Sensoreinrichtung (36) zur Erfassung von Schwingungen und zur Erzeugung von Messwerten hieraus, wobei die Sensoreinrichtung (36) an der Haltevorrichtung (21) angeordnet ist und dazu eingerichtet ist, Schwingungen des mit der Haltevorrichtung (21) fixierten Werkstückes (12) zu erfassen. Die Erfindung betrifft auch ein Verfahren zur Überwachung einer Handhabungsvorrichtung.

## Beschreibung

Die vorliegende Erfindung betrifft eine Handhabungsvorrichtung gemäß Anspruch 1, umfassend insbesondere eine Haltevorrichtung zum Fixieren eines Werkstückes und eine Sensoreinrichtung zur Erfassung von Schwingungen und zur Erzeugung von Messwerten hieraus.

Handhabungsvorrichtungen der genannten Art kommen z.B. in Bearbeitungsanlagen zur Bearbeitung von Werkstücken zum Einsatz. Solche Bearbeitungsanlagen umfassen neben der Handhabungsvorrichtung auch Bearbeitungsvorrichtungen, beispielsweise Werkzeugmaschinen, Sägen, Fräsen, Bohrer. Hierbei werden die Werkstücke mit der Haltevorrichtung fixiert und ggf. verlagert. Im vorliegenden Zusammenhang ist die Haltevorrichtung insbesondere als Greifvorrichtung oder Spannvorrichtung ausgebildet. Eine Spannvorrichtung dient insbesondere dazu, das Werkstück während seiner Bearbeitung insbesondere stationär zu fixieren. Eine Greifvorrichtung kann dazu ausgebildet sein, ein an ihr fixiertes Werkstück zu verlagern oder umzusetzen.

Im Betrieb der Bearbeitungsvorrichtungen können an verschiedenen Teilen der Vorrichtung unerwünschte Schwingungen auftreten. Die Ursachen für diese Schwingungen können im Bearbeitungsvorgang selbst liegen, beispielsweise durch das Einwirken eines angetriebenen Werkzeugs (Bohrer, Fräse, Säge etc.) auf das Werkstück. Zur Erzeugung der Schwingungen können aber auch andere bewegte Teile beitragen, zum Beispiel Antriebswellen, Schwungräder, Motoren. Schwingungen treten in hohem Maße auf, wenn Anpassungsfehler, Schäden oder Verschleiß an den bewegten Teilen der Vorrichtungen vorliegen (Antriebschäden, Getriebeschäden, Lagerschäden, Unwuchten usw.). Auch der Handhabungsvorgang, beispielsweise ein Umsetzen eines Gegenstandes mittels eines Greifers, kann zu Schwingungen führen, wenn die mechanischen Einflussgrößen (Kräfte, Massen, Beschleunigungen, Geschwindigkeiten der Handhabung, Taktzahlen, usw.) unzureichend aufeinander abgestimmt sind.

Treten die Schwingungen in zu großem Maße auf, so kann dies zu unerwünschten Qualitätseinbußen, zu Beschädigungen und zu erhöhtem Verschleiß der verschiedenen Vorrichtungen führen. Außerdem treten verstärkte Geräuschemissionen auf. Die Schwingungen können auf das Werkstück übertragen werden und dort zu Beeinträchtigungen führen und/oder eine Fixierung mit der Haltevorrichtung unzuverlässig machen. Insbesondere besteht die Gefahr, dass aufgrund von Resonanzerscheinungen in den Vorrichtungen sehr große Schwingungsamplituden auftreten, was zur Zerstörung einzelner Komponenten führen kann.

In Werkzeugmaschinen ist es bekannt, bewegte Maschinenteile wie rotierende Wellen oder Antriebselemente auf unerwünschte Schwingungen zu überwachen. Verfahren und Vorrichtungen zur Schwingungsanalyse von Anlagen oder Maschinenelementen sind beispielsweise in der DE 10 2011 055 523 A1 oder der DE 44 05 660 A1 beschrieben. In der DE 10 2006 049 867 A1 ist eine Werkzeugmaschine mit Spannvorrichtung und angetriebenem Werkzeug beschrieben, wobei mittels Sensoren die relativen Schwingungsgeschwindigkeiten von Spannvorrichtung und Werkzeug ermittelt werden. Hierbei ist es problematisch, die Sensoren in geeigneter Weise an den bewegten Maschinenteilen zu positionieren, um unerwünschte Schwingungen zu erkennen.

Der Erfindung liegt die Aufgabe zugrunde, auf einfache Weise eine zuverlässige Handhabung von Werkstücken zu ermöglichen und die Zuverlässigkeit und Bearbeitungsqualität für Werkstücke in Bearbeitungsanlagen zu verbessern.

Diese Aufgabe wird durch die Handhabungsvorrichtung gemäß Anspruch 1 gelöst. Die Handhabungsvorrichtung umfasst zumindest eine Haltevorrichtung, die dazu ausgebildet ist, ein Werkstück an der Haltevorrichtung zu fixieren. Ferner umfasst die Handhabungsvorrichtung eine Sensoreinrichtung, welche dazu ausgebildet ist, Schwingungen zu erfassen und hieraus Messwerte zu erzeugen. Die Sensoreinrichtung ist insbesondere an der Haltevorrichtung angeordnet. Die Sensoreinrichtung ist derart eingerichtet und auch derart an der Haltevorrichtung positioniert, dass gezielt Schwingungen (z.B. Vibrationen, Körperschall, longitudinale und/oder transversale mechanische Schwingungen) des mit der Haltevorrichtung fixierten Werkstückes erfasst werden. Insofern ist die Sensoreinrichtung nicht primär dafür eingerichtet, Schwingungen bewegter Maschinenteile zu überwachen, sondern dient insbesondere der Schwingungsüberwachung des fixierten Werkstückes.

In Bearbeitungsanlagen ist die Haltevorrichtung diejenige funktionale Einheit, die unmittelbar mit dem Werkstück in Wirkverbindung steht. Der Kontakt mit dem Werkstück besteht in der Regel auch über eine längere Zeit, insbesondere während einer Bearbeitung mit der Bearbeitungsvorrichtung. Durch die Anordnung der Sensoreinrichtung an der Haltevorrichtung für das Werkstück kann somit eine andauernde und zuverlässige Überwachung erzielt werden. Eine problematische Anordnung von Sensoren an bewegten Maschinenteilen wie Antriebswellen oder Kolben ist dabei nicht erforderlich.

Die mittels der Sensoreinrichtung ermittelten Messwerte ermöglichen es insbesondere, den mit der Handhabungsvorrichtung durchgeführten Handhabungsprozess zu kontrollieren. Insbesondere kann durch Überwachung der Schwingungen festgestellt werden, ob das Werkstück mit der Haltevorrichtung fixiert ist und/oder ob die Fixierung in ausreichendem Maße oder zuverlässig erfolgt ist. Zusätzlich kann aus dem Schwingungsverhalten auf andere Beeinträchtigungen des Handhabungsprozesses und/oder Bearbeitungsprozesses geschlossen werden. Beispiele für solche Beeinträchtigungen sind: Unpassende Prozessparameter für die Bearbeitung, überhöhte Taktraten, Bewegungsabläufe mit zu großen Beschleunigungen beispielsweise beim Umsetzen der Werkstücke, ungenaue Positionierung der Haltevorrichtung in Bezug auf Bearbeitungsvorrichtung und/oder auf das Werkstück, verschlissene oder unangepasste Werkzeuge, usw..

Die Haltevorrichtung ist insbesondere als Unterdruck-Haltevorrichtung ausgebildet, wobei das Werkstück mittels Unterdruck an der Haltevorrichtung fixierbar ist. Beispielsweise kann es sich um einen Sauggreifer oder eine Saugspannvorrichtung handeln. Bei derartigen Unterdruck-Haltevorrichtungen kann durch Überwachung der Schwingungen des Werkstückes erkannt werden, ob das Werkstück an der Haltevorrichtung anliegt (Präsenzkontrolle) und/oder ob das Werkstück zuverlässig fixiert und/oder ob das Werkstück richtig positioniert ist. Im Stand der Technik ist es diesbezüglich bekannt, den Handhabungsprozess einer Unterdruck-Handhabungsvorrichtung beispielsweise durch Druckmessungen des zur Fixierung des Werkstücks wirksamen Druckes zu überwachen. Insofern bietet die beschriebene Ausgestaltung eine alternative Möglichkeit zur Überwachung des Handhabungsprozesses, die zuverlässig und einfach funktioniert. Zusätzlich können Informationen über einen am fixierten Werkstück durchgeführten Bearbeitungsprozess und/oder über einen mit dem fixierten Werkstück durchgeführten Handhabungsvorgang (z.B. Umsetzen, Verlagern) gewonnen werden.

Eine vorteilhafte Konstruktion ergibt sich dadurch, dass die Haltevorrichtung ein Gehäuse aufweist (zum Beispiel Gehäuse einer Unterdruck-Spanneinrichtung, eines Sauggreifers o.ä.) und dass die Sensoreinrichtung in das Gehäuse der Haltevorrichtung integriert eingebaut ist.

Die Haltevorrichtung weist insbesondere einen Anlageabschnitt auf, welcher zum Fixieren des Werkstückes an diesem anliegt. Bei dem Halteabschnitt kann es sich beispielsweise um eine dem Werkstück zugewandte Seite des Gehäuses der Haltevorrichtung handeln. Der Halteabschnitt kann auch von einem zusätzlichen Bauteil gebildet sein, beispielsweise von einer Saugplatte eines Flächengreifers, einer Auflagefläche einer Spannvorrichtung o.ä..

Nach einer vorteilhaften Ausgestaltung weist die Sensoreinrichtung wenigstens zwei Schwingungssensoren auf, wobei ein Schwingungssensor an dem Anlageabschnitt angeordnet ist, und ein zweiter Schwingungssensor an einem von dem Anlageabschnitt beabstandeten Abschnitt der Haltevorrichtung angeordnet ist. Durch Vergleich der Messungen der beiden Sensoren kann gezielt der Beitrag der Werkstückschwingung ermittelt werden. Auch können Referenzmessungen durchgeführt werden und so eine genauere Datenauswertung erfolgen.

Vorzugsweise ist zusätzlich eine Auswerteeinrichtung vorgesehen, welche die Messwerte als Eingangswerte zugeführt werden. Hierbei ist es insbesondere vorteilhaft, wenn auch die Auswerteeinrichtung an der Haltevorrichtung angeordnet ist. Dies hat den Vorteil, dass die Haltevorrichtung in einer komplexeren Handhabungsvorrichtung als selbstständige, modulare Überwachungseinheit wirken kann - zusätzlich zu ihrer Funktion zum Fixieren des Werkstückes. Insbesondere kann die Auswerteeinrichtung in ein Gehäuse der Haltevorrichtung integriert eingebaut sein.

Grundsätzlich kann es jedoch auch vorteilhaft sein, wenn die Auswerteeinrichtung nicht an der Haltevorrichtung angeordnet ist. Insofern können die nachfolgend erläuterten Ausgestaltungen der Auswerteeinrichtung auch unabhängig von der konkreten Anordnungsposition der Auswerteeinrichtung vorgesehen sein.

Der Auswerteeinrichtung kann insbesondere auch eine Speichereinrichtung zugeordnet sein, in welcher die Messwerte und/oder die Ergebnisse einer Auswertung der Messwerte durch die Auswerteeinrichtung speicherbar sind. Dadurch kann der Verlauf eines Handhabungsprozesses zeitabhängig protokolliert werden und bei Bedarf an der Handhabungsvorrichtung selbst ausgelesen werden.

Nach einem besonders vorteilhaften Aspekt der Erfindung ist die Auswerteeinrichtung dazu ausgebildet, die Messwerte mittels eines in der Auswerteeinrichtung hinterlegten Datenverarbeitungsprogrammes zu verarbeiten und insofern ein Verarbeitungsergebnis zu generieren. Darüber hinaus kann vorgesehen sein, dass bei Nichteinhaltung eines in der Auswerteeinrichtung hinterlegten Grenzwertkriteriums (d.h. wenn Ergebnisse der Auswertung außerhalb eines durch wenigstens einen Grenzwert definierten Toleranzbereiches liegen) ein Fehlersignal zu erzeugt wird.

Erfasst die Sensoreinrichtung beispielsweise Schwingungen mit einer Kenngröße (zum Beispiel Intensität, Amplitude, (Schwingungs-)Weg, (Schwingungs-)Geschwindigkeit, (Schwingungs-)Beschleunigung o.ä.), die einen bestimmten als kritisch angesehenen Schwellwert überschreitet, so deutet dies darauf hin, dass das Werkstück nicht richtig fixiert ist oder der Handhabungsprozess in sonstiger Weise beeinträchtigt ist (z.B. zu schnelle Bewegungsänderungen mittels einer Greifvorrichtung, falsche oder verschlissene Werkzeuge in einer zugeordneten Bearbeitungsvorrichtung, zu hohe Bearbeitungsintensität, o.ä.). Dies geht wie beschrieben damit einher, dass die Auswerteeinrichtung ein Auswerteergebnis ermittelt, welches außerhalb des Grenzwertekriteriums liegt. Das Ausgeben eines Fehlersignals ermöglicht es dann, korrigierend in den Handhabungsprozess einzugreifen.

Das Fehlersignal kann beispielsweise ein elektrisches Signal sein, welches einer Datenausgabeeinheit der zur Darstellung von Messergebnissen und/oder Warnsignale zugeführt wird. Denkbar ist auch, dass die Auswerteeinheit direkt optische, akustische oder sonstige Warnsignale erzeugt.

Zur weiteren Ausgestaltung können Mittel vorgesehen sein, um die auf die Haltevorrichtung einwirkenden Schwingungen bzw. bestimmte Schwingungsanteile zu dämpfen oder zu verstärken. Hierzu können passive oder aktive Einrichtungen vorgesehen sein.

Beispielsweise kann wenigstens ein passives Absorberelement vorgesehen sein, welches dazu ausgebildet ist, Schwingungen zu absorbieren und/oder zu dämpfen, die vom Werkstück auf die Haltevorrichtung übertragen werden. Das mindestens eine Absorberelement vorzugsweise an der Haltevorrichtung angeordnet.

Denkbar ist auch, dass die Haltevorrichtung eine Resonanzeinrichtung aufweist, welche mit Schwingungen eines definierten Frequenzbereichs in Resonanz versetzbar ist. Durch die Resonanzeinrichtung können bestimmte Schwingungsanteile gezielt verstärkt werden. So kann eine kontrollierte Kopplung der Haltevorrichtung mit einem schwingenden Werkstück erzielt werden.

Vorteilhaft kann es auch sein, dass die Haltevorrichtung einen aktiv angetriebenen antreibbaren Schwingungsaktor aufweist.
Der Schwingungsaktor ist insbesondere dazu ausgebildet, zur zumindest teilweisen Kompensation von Schwingungen des fixierten Werkstückes aktiv (Gegen-)Schwingungen an der Haltevorrichtung zu erzeugen. Der Schwingungsaktor umfasst beispielsweise eine aktiv angetriebene Schwungmasse, z.B. ein rotatorisch und/oder oszillatorisch angetriebenes Schwungrad. Somit kann nicht nur eine zuverlässige Überwachung erzielt werden, sondern auch aktiv einer Beeinträchtigung durch Schwingungen entgegengewirkt werden.

Nach einer vorteilhaften Ausgestaltung ist vorgesehen, dass die oben genannte Auswerteeinrichtung mit dem Schwingungsaktor zusammenwirkt und den Schwingungsaktor in Abhängigkeit der Messwerte ansteuert.

Je nach Einsatzzweck kann es vorteilhaft sein, die oben genannten Mittel (Absorberelemente, Schwingungsaktoren und/oder Resonanzeinrichtungen) jeweils optional, ergänzend zueinander oder alternativ vorzusehen.

Eine einfache Sensoreinrichtung kann z.B. ein Schaltelement umfassen, das bei Überschreitung eines bestimmten Grades der Einwirkung schaltet und insofern einen diskret ansprechenden Sensor bildet. Vorteilhaft ist aber auch, wenn die Sensoreinrichtung eine kontinuierliche und graduelle Überwachung ermöglicht, d.h. derart ausgebildet ist, dass verschiedene Stärken der Einwirkung unterschieden werden können.

Eine zuverlässige Messung von Schwingungen und/oder Vibrationen lässt sich z.B. dadurch erzielen, dass die Sensoreinrichtung einen Beschleunigungssensor und/oder einen Körperschallsensor umfasst oder hiervon gebildet ist.

Zur Übertragung von Schwingungen des Werkstückes auf die Sensoreinrichtung ist vorzugsweise ein Übertragungsteil vorgesehen. Das Übertragungsteil ist insbesondere dazu ausgebildet, die auf den Anlageabschnitt der Haltevorrichtung einwirkenden Schwingungen aufzunehmen und auf die Sensoreinrichtung zu übertragen. Beispielsweise kann das Übertragungsteil von einer fluidischen Feder, Druckluftfeder, einem Stößel oder ähnlichem gebildet sein. Generell hat das Übertragungsteil die Funktion, Schwingungsenergie vom Werkstück auf die Sensoreinrichtung zu übertragen.

Zur weiteren Ausgestaltung weist die Haltevorrichtung Datenübertragungsmittel zur Kommunikation mit einer übergeordneten Steuereinrichtung (z.B. einer Maschinensteuerung) und/oder mit einer Speichereinrichtung auf. Die Datenübertragungsmittel können zur direkten Kommunikation mit der Steuereinrichtung ausgebildet sein, oder aber zur indirekten Kommunikation z.B. über ein Netzwerk ausgebildet sein. Nach einer vorteilhaften Ausgestaltung sind die Datenübertragungsmittel zur drahtlosen Kommunikation ausgebildet. Die Datenübertragungsmittel können auch als Anschlusselement für einen Daten-Bus, IO-Link oder Ähnliches ausgebildet sein.

Die Datenübertragungsmittel können dazu ausgebildet sein, die Messwerte der Sensoreinrichtung and die Steuereinrichtung zu übertragen. Denkbar ist insbesondere, dass die Datenübertragungsmittel mit der genannten Auswerteeinrichtung zusammenwirken und die Auswerteergebnisse an die Steuereinrichtung übertragen und/oder Fehlermeldungen übertragen.

Zusätzlich zu der Sensoreinrichtung zur Messung von Schwingungen können weitere Sensoren vorgesehen sein, wie ein Drucksensor (z.B. zur Überwachung eines Unterdrucks zum Fixieren des Werkstückes), ein Kraftsensor, eine Wegmesseinrichtung usw. So kann eine noch umfassendere Überwachung des Handhabungsprozesses und/oder des Bearbeitungsprozesses ermöglicht werden.

Die Handhabungsvorrichtung kann Teil einer komplexeren Bearbeitungsanlage für Werkstücke sein. Solche Bearbeitungsanlagen umfassen wenigstens eine Handhabungsvorrichtung der genannten Art und wenigstens eine Bearbeitungsvorrichtung zur Bearbeitung des Werkstückes, z.B. eine Werkzeugmaschine wie Kreissäge, Fräse, Bohrer.

Die eingangs gestellte Aufgabe wird auch gelöst durch ein Verfahren zur Überwachung einer Handhabungsvorrichtung bzw. durch ein Verfahren zur Überwachung des Betriebs einer Handhabungsvorrichtung. Die Handhabungsvorrichtung umfasst hierzu zumindest eine Haltevorrichtung zum Fixieren eines Werkstückes und eine Sensoreinrichtung zur Erfassung von Schwingungen. Mittels der Sensoreinrichtung werden Schwingungen des mit der Haltevorrichtung fixierten Werkstückes erfasst.
Die dadurch ermöglichte Überwachung erlaubt es, in den Handhabungsvorgang korrigierend einzugreifen, wenn dieser die gewünschten Kriterien nicht erfüllt. Insofern kann durch das Verfahren die Zuverlässigkeit des Handhabungsprozesses verbessert werden.

Das Verfahren kann grundsätzlich durch sämtliche im Zusammenhang mit der Handhabungsvorrichtung erläuterten Maßnahmen weiter ausgestaltet werden.

Vorzugsweise erfolgt eine Auswertung der mit der Sensoreinrichtung erzielten Messergebnisse, beispielsweise mit der vorstehend erläuterten Auswerteeinheit. Wie beschrieben erfolgt die Auswertung insbesondere dahingehend, dass bei Nichteinhaltung eines definierten Grenzwertkriteriums (d.h. wenn Ergebnisse der Auswertung außerhalb eines durch wenigstens einen Grenzwert definierten Toleranzbereiches liegen) ein Fehlersignal zu erzeugt wird. Denkbar ist, dass ein Fehlersignal generiert wird, wenn die erfassten Schwingungen von einem vorgegebenen Sollwert abweichen. Die Auswertung kann auch derart erfolgen, dass ein Warnsignal generiert wird, wenn sich die erfassten Schwingungen oder Schwingungsanteile über die Zeit verändern. Wie erläutert ist insbesondere auch vorteilhaft, wenn bestimmte Schwingungsanteile von einem Absorberelement aufgenommen und/oder gedämpft werden. Andererseits können bestimmte Schwingungsanteile von einer Resonanzeinrichtung verstärkt werden, sodass diese Anteile besser ausgewertet werden können. Auch können bestimmte Schwingungsanteile wie erläutert mit einem antreibbaren Schwingungsaktor der Haltevorrichtung kompensiert werden. Gemäß dem Verfahren können auch weitere Sensorsignale zusätzlich mit ausgewertet werden, beispielsweise gemessene Druckwerte, gemessene Abstandswerte zwischen Haltevorrichtung und Werkstück, oder Ähnliches.

Die Erfindung wird nachfolgend anhand der Figuren näher erläutert.

Es zeigen:
Figur 1: schematische Darstellung einer Bearbeitungsanlage mit einer erfindungsgemäßen Handhabungsvorrichtung;
Figur 2: skizzierte Darstellung einer erfindungsgemäßen Handhabungsvorrichtung.

In der nachfolgenden Beschreibung sowie in den Figuren sind für identische oder einander entsprechende Merkmale jeweils dieselben Bezugszeichen verwendet.

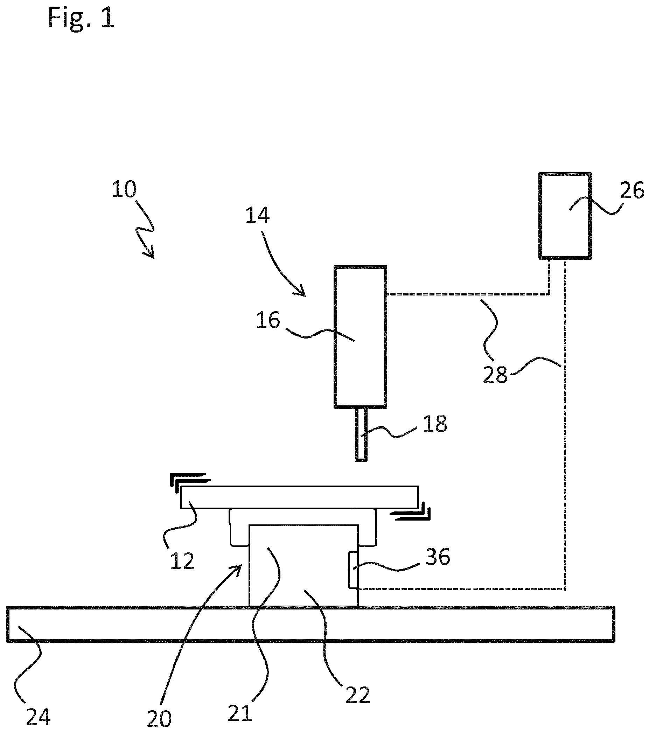

In der Figur 1 ist schematisch eine Bearbeitungsanlage 10 zur Bearbeitung eines z.B. plattenartigen Werkstückes 12 dargestellt. Die Bearbeitungsanlage 10 umfasst eine Bearbeitungsvorrichtung 14, die im dargestellten Beispiel als Fräsvorrichtung 16 mit einem aktiv angetriebenen Fräswerkzeug 18 ausgebildet ist.

In der Bearbeitungsanlage 10 erfolgt neben der Bearbeitung des Werkstückes 12 mit der Bearbeitungsvorrichtung 14 auch eine Handhabung des Werkstückes 12. Hierfür ist eine Handhabungsvorrichtung 20 vorgesehen, mittels welcher das Werkstück 12 fixiert werden kann. Beispielsweise wird das Werkstück 12 fixiert und mittels eines Bewegungsaktors (nicht dargestellt) der Handhabungsvorrichtung 20 umgesetzt und z.B. zu einer weiteren Bearbeitungsstation verbracht. In diesem Fall umfasst die Handhabungsvorrichtung eine Greifvorrichtung. Andererseits kann die Handhabungsvorrichtung 20 das Werkstück während seiner Bearbeitung Fixieren, wobei die Handhabungsvorrichtung eine Spannvorrichtung umfasst.

Im dargestellten Beispiel wird das Werkstückes 12 bei seiner Bearbeitung mittels einer Haltevorrichtung 21 der Handhabungsvorrichtung 20 fixiert. Die Haltevorrichtung 21 ist daher im dargestellten Beispiel als Unterdruck-Spannvorrichtung 22 ausgebildet. Die Unterdruck-Spannvorrichtung 22 ist an einem Maschinentisch 24 angeordnet, sodass das Werkstück 12 bei der Bearbeitung ortsfest fixierbar ist.

Zur Ansteuerung der Bearbeitungsvorrichtung 14 und/oder der Haltevorrichtung 21 ist im dargestellten Beispiel als Maschinensteuerung eine übergeordnete Steuereinrichtung 26 vorgesehen, die über entsprechende Signalübertragungswege 28 mit der Bearbeitungsvorrichtung 14 und/oder der Haltevorrichtung 21 kommuniziert.

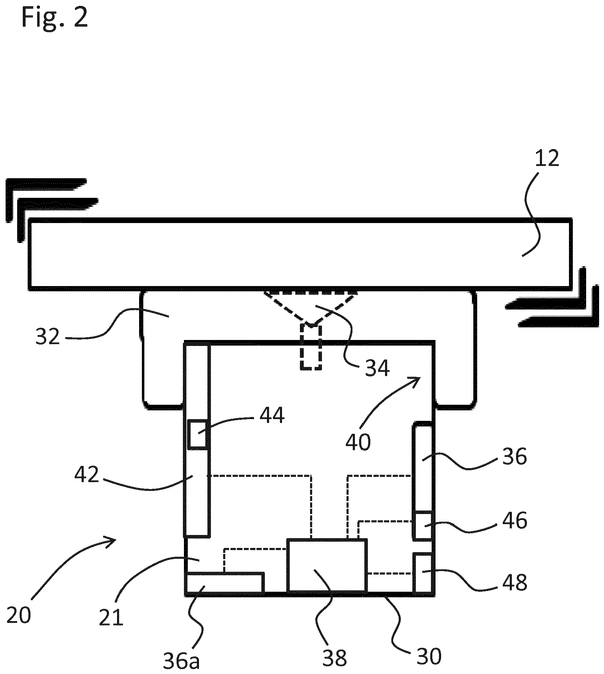

Die in der Figur 2 skizziert dargestellte Haltevorrichtung 21 weist ein Gehäuse 30 auf, dessen dem Werkstück 12 zugewandte Seite mit einer skizziert dargestellten Saugplatte 32 versehen ist. Die Saugplatte 32 bildet im dargestellten Beispiel einen Anlageabschnitt der Haltevorrichtung 21. Der Anlageabschnitt (hier: Saugplatte 32) weist im dargestellten Beispiel eine skizzierte Saugöffnung 34 auf, welche an ein nicht näher dargestelltes Unterdruck-Versorgungssystem angeschlossen ist. Liegt das Werkstück 12 an dem Anlageabschnitt 32 an, so kann durch Beaufschlagung der Saugöffnung 34 mit Unterdruck das Werkstück 12 fixiert werden.

Die Haltevorrichtung 21 weist im dargestellten Beispiel eine Sensoreinrichtung 36 sowie eine weitere Sensoreinrichtung 36a auf. Die Sensoreinrichtung 36 ist an einem dem Anlageabschnitt 32 zugewandten Bereich der Haltevorrichtung 21 angeordnet und vorzugsweise im Gehäuse 30 integriert verbaut. Die Sensoreinrichtung 36a ist an einem den Anlageabschnitt 32 abgewandten Abschnitt der Haltevorrichtung 21 angeordnet (vorzugsweise ebenfalls in dem Gehäuse 30 integriert, jedoch weiter von dem Anlageabschnitt 32 beabstandet, als die Sensoreinrichtung 36). Bei den Sensoreinrichtungen 36, 36a handelt es sich um Sensoren zur Erfassung von Schwingungen. Die Sensoreinrichtungen erzeugen aus den erfassten Schwingungen Messwerte, welche einer Auswerteeinrichtung 38 zugeführt werden können (Signalwege gestrichelt eingezeichnet).

Insbesondere die Sensoreinrichtung 36 ist derart angeordnet, dass Schwingungen des an dem Anlageabschnitt 32 anliegenden Werkstückes 12 detektiert werden können. Die Schwingungen sind in den Figuren durch Doppellinien an den Ecken des Werkstückes symbolisiert. Zur Übertragung der Schwingungen des Werkstückes 12 auf die Sensoreinrichtung 36 kann die Haltevorrichtung 21 entsprechende Übertragungsteile 40 aufweisen. Die weitere Sensoreinrichtung 36a ermöglicht es beispielsweise, Referenzmessungen durchzuführen und/oder die Schwingungen des Werkstückes 12 genauer zu messen.

Die Haltevorrichtung kann, wie in Figur 2 skizziert, Mittel 42 aufweisen, um die auf die Haltevorrichtung einwirkenden Schwingungen bzw. bestimmte Schwingungsanteile zu dämpfen, zu verstärken oder in definierter Weise zu beeinflussen. Beispielsweise kann dieses Mittel 42 ein Absorberelement umfassen, mit welchem bestimmte Vibrationen oder Schwingungen absorbiert werden können. Das Mittel 42 kann auch eine Resonanzeinrichtung aufweisen, die mit Schwingungen eines definierten Frequenzbereichs in Resonanz bringbar ist. Alternativ oder ergänzend zu solchen passiven Mitteln kann das Mittel 42 auch aktiv ausgestaltet sein, um auf die Schwingung einzuwirken. Beispielsweise kann das Mittel 42 einen antreibbaren Schwingungsaktor 44 umfassen, welcher z.B. eine aktiv angetriebene Schwungmasse zu Erzeugung von gegen Schwingungen aufweist.

Wie vorstehend erläutert, ist die Auswerteeinheit 38 dazu ausgebildet, die Messwerte der Sensoreinrichtung 36 (und gegebenenfalls 36a) auszuwerten. Insbesondere ist vorgesehen, dass die Auswerteeinrichtung 36 ein Fehlersignal erzeugt, wenn die ausgewerteten Ergebnisse ein definiertes Grenzwertkriterium nicht einhalten (zum Beispiel wenn die erfassten Schwingungen eine zu hohe Auslenkung, Amplitude, Geschwindigkeit oder Beschleunigung aufweisen). Denkbar ist auch, dass die Auswerteeinrichtung 38 den Schwingungsaktor 44 zur Erzeugung einer entsprechenden Gegenschwingung zur Kompensation der erfassten Schwingung ansteuert.

Die Haltevorrichtung 21 kann eine Datenausgabeeinheit 46 aufweisen, mittels welcher Auswerteergebnisse der Auswerteeinheit 38 und/oder die genannten Fehlersignale ausgegeben werden können. Beispielsweise kann es sich um eine optische oder akustische Datenausgabe handeln.

Die Haltevorrichtung 21 kann außerdem Datenübertragungsmittel 48 aufweisen, beispielsweise um mit der Steuereinrichtung 26 zu kommunizieren. Die Datenübertragungsmittel 48 können zum Beispiel als BUS-Schnittstelle oder Schnittstelle zur drahtlosen Kommunikation ausgebildet sein.

## Patentansprüche

1. Handhabungsvorrichtung (20)
mit einer Haltevorrichtung (21) zum Fixieren eines Werkstückes (12), insbesondere Unterdruck-Greifvorrichtung oder Unterdruck-Spannvorrichtung (22),
und mit einer Sensoreinrichtung (36) zur Erfassung von Schwingungen und zur Erzeugung von Messwerten hieraus, wobei die Sensoreinrichtung (36) an der Haltevorrichtung (21) angeordnet ist und dazu eingerichtet und derart positioniert ist, dass Schwingungen des mit der Haltevorrichtung (21) fixierten Werkstückes (12) erfasst werden.

2. Handhabungsvorrichtung (20) nach Anspruch 1, **dadurch gekennzeichnet, dass** eine Auswerteeinrichtung (38) vorgesehen ist, welcher die Messwerte als Eingangswerte zugeführt werden, wobei die Auswerteeinrichtung (38) an der Haltevorrichtung (21) angeordnet ist.

3. Handhabungsvorrichtung (20) nach Anspruch 2, **dadurch gekennzeichnet, dass** die Auswerteeinrichtung (38) dazu ausgebildet ist, die Messwerte mittels eines in der Auswerteeinrichtung (38) hinterlegten Datenverarbeitungsprogrammes zu verarbeiten und bei Nichteinhaltung eines in der Auswerteeinrichtung hinterlegten Grenzwertkriteriums ein Fehlersignal zu erzeugen.

4. Handhabungsvorrichtung (20) nach einem der vorherigen Ansprüche, **dadurch gekennzeichnet, dass** die Haltevorrichtung (21) wenigstens ein Absorberelement (42) aufweist, welches dazu ausgebildet ist, Schwingungen zu absorbieren und/oder zu dämpfen, die vom Werkstück auf die Haltevorrichtung übertragen werden.

5. Handhabungsvorrichtung (20) nach einem der vorherigen Ansprüche, **dadurch gekennzeichnet, dass** die Haltevorrichtung einen antreibbaren Schwingungsaktor (44) aufweist, der dazu ausgebildet ist, zur Kompensation von Schwingungen des fixierten Werkstückes (12) aktiv Schwingungen an der Haltevorrichtung (21) zu erzeugen.

6. Handhabungsvorrichtung (20) nach einem der vorherigen Ansprüche, **dadurch gekennzeichnet, dass** die Haltevorrichtung (21) eine Resonanzeinrichtung aufweist, welche mit Schwingungen eines definierten Frequenzbereichs in Resonanz versetzbar ist.

7. Handhabungsvorrichtung (20) nach einem der vorherigen Ansprüche, **dadurch gekennzeichnet, dass** die Haltevorrichtung (21) Datenübertragungsmittel (48) zur Kommunikation, insbesondere zur drahtlosen Kommunikation, mit einer übergeordneten Steuereinrichtung (26) aufweist.

8. Verfahren zur Überwachung des Betriebs einer Handhabungsvorrichtung bei der Handhabung eines Werkstückes (12), mit einer Haltevorrichtung (21) zum Fixieren eines Werkstückes (12), und mit einer Sensoreinrichtung (36) zur Erfassung von Schwingungen, wobei gemäß dem Verfahren mittels der Sensoreinrichtung (36) Schwingungen des mit der Haltevorrichtung (21) fixierten Werkstückes (12) erfasst werden.
